## Europäisches Patentamt

## European Patent Office

## Office européen des brevets

(19)

(11) Veröffentlichungsnummer: **0 254 930 B1**

(12) # EUROPÄISCHE PATENTSCHRIFT

(45) Veröffentlichungstag der Patentschrift: **11.03.92**

(21) Anmeldenummer: **87109956.0**

(22) Anmeldetag: **10.07.87**

(51) Int. Cl.⁵: **H02K 1/20**, H02K 9/06, H02K 5/22

(54) **Elektromotor.**

(30) Priorität: **29.07.86 DE 3625661**

(43) Veröffentlichungstag der Anmeldung:
**03.02.88 Patentblatt 88/05**

(45) Bekanntmachung des Hinweises auf die
Patenterteilung:
**11.03.92 Patentblatt 92/11**

(84) Benannte Vertragsstaaten:
**AT DE FR GB IT**

(56) Entgegenhaltungen:
**EP-A- 0 039 493**

**PATENT ABSTRACTS OF JAPAN, Band 6, Nr. 164 (E-127)[1042], 27. August 1982; & JP-A-57 83 136 (MATSUSHITA SEIKO K.K.) 24-05-1982**

**PATENT ABSTRACTS OF JAPAN, Band 9, Nr. 56 (E-302)[1779], 12. März 1985; & JP-A-59 194 644 (FANUC K.K.) 05-11-1984**

**PATENT ABSTRACTS OF JAPAN, Band 8, Nr. 155 (E-256)[1592], 19. Juni 1984; & JP-A-59 59 034 (MITSUBISHI DENKI K.K.) 04-04-1984**

**PATENT ABSTRACTS OF JAPAN, Band 6, Nr. 21 (E-93)[899], 6. Februar 1982; & JP-A-56 141 740 (HITACHI SEISAKUSHO K.K.) 05-11-1981**

(73) Patentinhaber: **Halm, Richard
Silcherstrasse 54 Postfach 69
W-7066 Baltmannsweiler(DE)**

(72) Erfinder: **Halm, Richard
Silcherstrasse 54 Postfach 69
W-7066 Baltmannsweiler(DE)**

(74) Vertreter: **Patentanwälte Phys. Bartels
Dipl.-Ing. Fink Dr.-Ing. Held
Lange Strasse 51
W-7000 Stuttgart 1(DE)**

## Beschreibung

Die Erfindung betrifft einen Elektromotor, insbesondere einen Drehstromasynchronmotor mit Kurzschlußläufer, welcher die Merkmale des Oberbegriffs des Anspruches 1 aufweist.

Bei einem bekannten Motor dieser Art (EP-A-0 039 493) ist das Statorblechpaket in einem Gehäuse angeordnet, das an den beiden Stirnseiten des Statorblechpaketes anliegende und sich bis zu dessen zentraler Bohrung erstreckende Stirnwände aufweist. Die in den Eckbereichen des Statorblechpaketes vorgesehenen, nach außen offenen Schlitze dienen der Aufnahme von das Statorblechpaket zusammenhaltenden Stäben. Radial innerhalb der das Statorblechpaket in dessen Eckbereichen durchdringenden Kanälen, die sich durch die Stirnwände des Gehäuses hindurch fortsetzen, liegen an der Außenseite dieser Stirnwände die beiden Lagerschilde an. Da auf der Motorwelle ein Gebläserad angeordnet ist, welches Kühlluft über die Außenseite der Lagerschilde hinweg durch die in den Eckbereichen des Statorblechpaketes liegenden Kanäle saugt, erfahren das Statorblechpaket und die in ihm liegende Wicklung eine relativ gute Kühlung, wobei durch die Anordnung der die Kühlkanäle bildenden Durchbrüche in den Eckbereichen der Bleche der für den magnetischen Fluß benötigte Querschnitt nicht vermindert wird. Zu einer solchen Querschnittsverminderung führen nur die zwischen je zwei benachbarten Eckbereichen vorgesehenen, nach außen offenen Schlitze für die Spannelemente, mittels deren die Bleche des Blechpaketes zusammengehalten werden. Nachteilig ist ferner, daß der in vielen Fällen erforderliche Motorfuß und der üblicherweise notwendige Klemmenkasten am Statorgehäuse befestigt werden müssen.

Der Erfindung liegt die Aufgabe zugrunde, einen Motor der eingangs genannten Art hinsichtlich seiner Herstellungskosten zu verbessern, ohne seine Kühlungsmöglichkeiten zu verschlechtern. Diese Aufgabe löst ein Motor mit den Merkmalen des Anspruches 1.

Die geringen Fertigungskosten werden nicht nur dadurch erreicht, daß das Statorblechpaket nicht in einem Gehäuse angeordnet ist. Auch die Möglichkeit, einen Motorfuß und einen Klemmkasten mit Hilfe von Schienen, welche in die nach außen offenen Schlitze des Statorblechpaketes eingreifen, mit dem Statorblechpaket zu verbinden, trägt erheblich zu einer Kostenreduzierung bei und erlaubt eine Ausführung als Normmotor ohne zusätzlichen Aufwand. Dabei ist von besonderem Vorteil, daß die nach außen offenen Schlitze in den Eckbereichen der quadratischen Bleche liegen und dadurch den für den magnetischen Jochfluß benötigten Querschnitt nicht verringern. Da die Lagerschilde unmittelbar an den beiden Stirnflächen des Statorblechpaketes anliegen, kann wenigstens eines der Lagerschilde aus Gießharz bestehen, mit dem auch die Statornuten ausgegossen sein können, was die Wärmeabgabemöglichkeit der Statorwicklung erheblich verbessert. Außerdem ist eine sehr gute Kühlung des Stators dadurch sichergestellt, daß die Lagerschilde die Eckbereiche des Statorblechpaketes freilassen, in denen sich die das Statorblechpaket auf seiner gesamten axialen Länge durchdringenden Kanäle befinden, die als Kühlkanäle genutzt werden können.

Bei einer bevorzugten Ausführungsform haben die nach außen offenen Schlitze abgewinkelte Flanken. Die entsprechend geformten Schienen, welche in diese Schlitze von der Stirnseite des Statorblechpaketes eingeführt werden können, weil die Schlitze sich in den freiliegenden Eckbereichen befinden, ergeben eine in radialer Richtung formschlüssige Verbindung, wozu es beispielsweise genügt, die Schienen einzukleben. Gegenüber Schlitzen mit einem anderen Querschnittsprofil, beispielsweise mit einem an sich bekannten Schwalbenschwanzprofil, haben die Schlitze mit abgewinkelten Flanken den Vorteil, daß ihr Platzbedarf minimal ist.

Bei einer vorteilhaften Ausführungsform besteht wenigstens eines der beiden Lagerschilde aus Gießharz. Da bei einem solchen Lagerschild zweckmäßigerweise der Wickelkopf der Statorwicklung in das Gießharz eingebettet ist, erhält man einen vorzüglichen Wärmeübergang. Ferner sind die Fertigungskosten vor allem dann sehr gering, wenn auch der in den Nuten des Statorblechpaketes liegende Teil der Statorwicklung in Gießharz eingebettet ist.

Zur weiteren Vergrößerung der wärmeabgebenden Außenmantelfläche kann man auch dann, wenn die Lagerschilde nicht aus Metall, sondern aus Gießharz bestehen, die Außenmantelfäche des einen Lagerschildes oder beider Lagerschilde mit in Motorlängsrichtung verlaufenden Rippen versehen, die einstückig mit dem Lagerschild ausgebildet sind. Solche Rippen verbessern die Kühlung vor allem dann, wenn auf das eine freie Ende der Motorwelle ein Lüfterrad aufgesetzt ist, das von einer den Motor wenigstens auf einem Teil seiner Länge übergreifenden Lüfterhaube abgedeckt ist, da dann der Kühlluftstrom in Motorlängsrichtung über die Außenmantelfläche zumindest des einen Lagerschildes geleitet wird.

Im folgenden ist die Erfindung anhand von in der Zeichnung dargestellten Ausführungsbeispielen erläutert.

Es zeigen

Fig. 1    einen Längsschnitt des ersten Ausführungsbeispiels,

Fig. 2    Schnitt nach der Linie II, II der Fig. 1,

Fig. 3 den Statorblechschnitt eines zweiten Ausführungsbeispiels,

Fig. 4 die Frontansicht eines ersten Motors mit Statorblechen gemäß Fig.3,

Fig. 5 eine Frontansicht eines zweiten Motors mit Statorblechen gemäß Fig. 3,

Fig. 6 einen Längsschnitt des Motors gemäß Fig. 5,

Fig. 7 einen Längsschnitt eines dritten Motors mit Statorblechen gemäß Fig. 3.

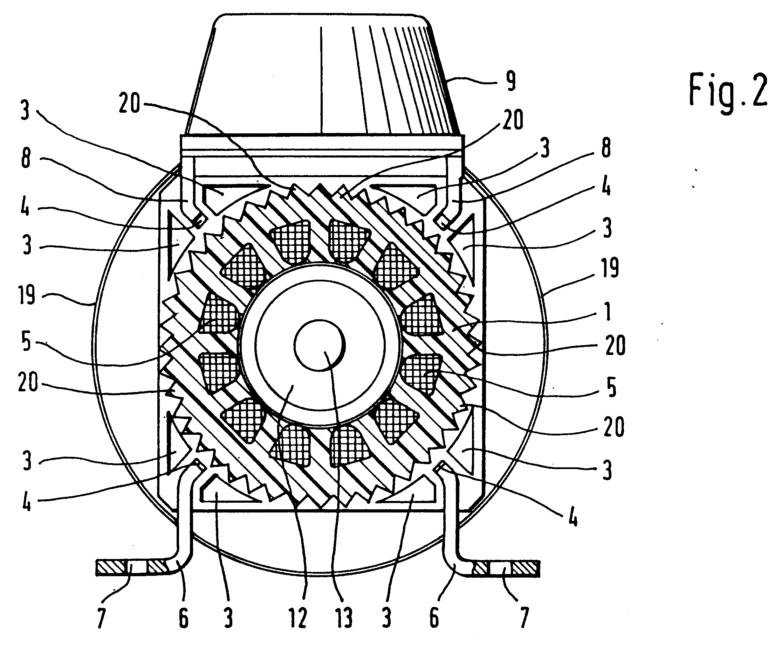

Ein Drehstromasynchronmotor in Normbauweise weist ein aus einzelnen Blechen 1 zusammengesetztes Statorblechpaket 2 auf. Wie Fig. 2 zeigt, haben die Bleche 1, die alle gleich ausgebildet sind, ein im wesentlichen quadratisches Außenprofil. Von der Quadratform weist das Außenprofil nur durch die aus Sicherheitsgründen angefasten Ekken ab. Die Seitenlänge der Bleche 1 ist im Ausführungsbeispiel geringfügig größer als der aus magnetischen Gründen erforderliche Außendurchmesser.

Die vier Eckbereiche jedes Bleches 1 sind je mit zwei geschlossenen Durchbrüchen 3 und einer zur Außenmantelfläche hin offenen, schlitzartigen Ausnehmung 4 versehen, welche alle ebenso wie die Nuten, in denen eine Statorwicklung 5 liegt, ausgestanzt sind, und zwar vorteilhafterweise in einem Komplettschnitt. Die Durchbrüche 3 und die Ausnehmungen 4 benachbarter Eckbereiche sind bezüglich den lotrecht auf den vier ebenen Außenmantelflächen des Statorblechpaketes 2 stehenden Längsmittelebenen symetrisch ausgebildet und angeordnet. Die Ausnehmungen 4 dringen, wie Fig. 2 zeigt, von der Unterseite bzw. der Oberseite des Statorblechpaketes 2 in dieses parallel zu dessen Seitenflächen ein bis zu der dem Eckbereich zugeordneten Diagonalen in der sie sich dann gegen das Zentrum hin bis zu einer Stelle erstrecken, welche im Ausführungsbeispiel einen Abstand vom Zentrum hat, der gleich der halben Seitenlänge der quadratischen Außenkontur des Bleches 1 ist. Selbstverständlich brauchen die Ausnehmungen 4 nicht parallelflankig zu sein, wie dies im Ausführungsbeispiel der Fall ist. Man könnte auch andere Querschnittsformen, beispielsweise eine Schwalbenschwanzform, vorsehen.

Die innere Begrenzungslinie der Durchbrüche 3 hat vom Zentrum des Statorblechpaketes 2 den gleichen Abstand wie das innen liegende Ende der Ausnehmung 4. Nach außen sowie zu der benachbarten Ausnehmung 4 hin sind die Durchbrüche 3 durch je einen Steg begrenzt.

In die beiden zur Unterseite des Statorblechpaketes 2 hin offenen Ausnehmungen 4 ist der entsprechend abgewinkelte eine Schenkel je einer Winkelschiene 6 eingeschoben. Die Dicke dieses Schenkels ist an die Weite der Ausnehmung 4 so angepaßt, daß die Winkelschiene 6 mit ausreichender Kraft festgeklemmt ist. Man könnte jedoch die Winkelschiene 6 auch in die zugeordnete Ausnehmung 4 einkleben. Die beiden aus Metall bestehenden, gleich ausgebildeten Winkelschienen 6 bilden den Motorfuß. Sie sind, wie Fig. 2 zeigt, so in die zugeordnete Ausnehmung 4 eingeschoben, daß der freie Schenkel nach außen weist. Die Abmessungen der Winkelschienen 6 sowie die Abmessung und Lage der in ihren freien Schenkeln vorgesehenen Bohrungen 7 sind so gewählt, daß der Motor die Normvorschrift erfüllt. Deshalb sind die Winkelschienen 6 auch länger als das Statorblechpaket 2.

In die beiden zur Oberseite hin offenen Ausnehmungen 4 sind schienenförmige Verankerungselemente 8 eines Klemmenkastens 9 eingeschoben und festgelegt. Der Boden des Klemmenkastens 9 wird durch diese Verankerungselemente 8 im Abstand über der Oberseite des Statorblechpaketes 2 gehalten, damit Kühlluft zwischen der Oberseite des Statorblechpaketes 2 und dem Boden des Klemmenkastens 9 hindurchtreten kann.

Die Durchbrüche 3 bilden acht das Statorblechpaket 2 in axialer Richtung durchdringende Lüftungskanäle.

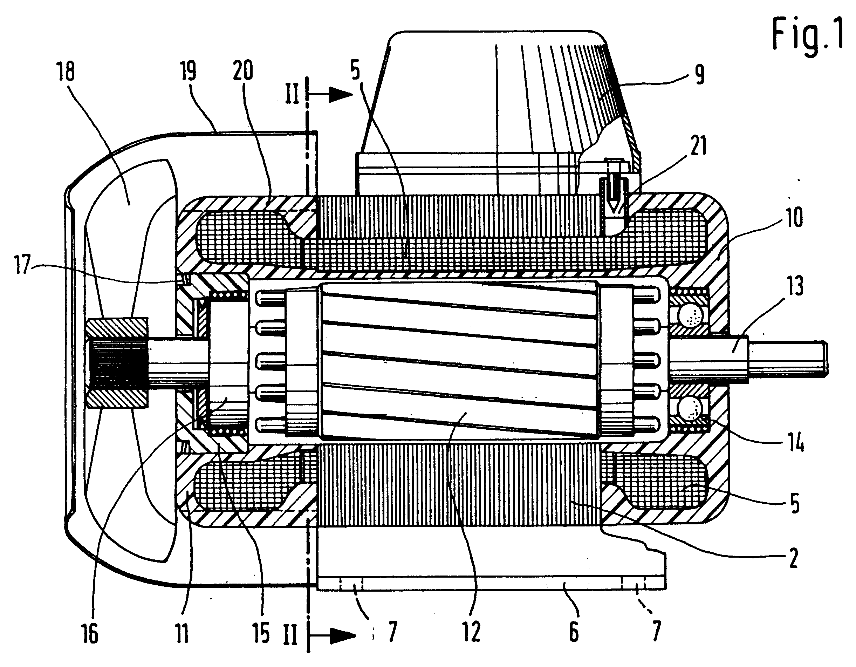

Die Statorwicklung 5 ist nicht nur im Bereich der Statornuten, sondern auch im Bereich der beiden Wickelköpfe in Gießharz eingebettet. Diese Einbettung erfolgt im Schleudergießverfahren in einem einzigen Arbeitsgang, wodurch nicht nur eine gute mechanische Verbindung aller Gießharzpartien erreicht wird, sondern auch eine völlige Freiheit von Lufteinschlüssen. Wie insbesondere Fig. 1 zeigt, bildet das die beiden Wickelköpfe einbettende Gießharz die beiden sich an die Stirnflächen des Statorblechpaketes 2 anschließenden Lagerschilde 10 und 11. Die Außenmantelfläche beider Lagerschilde 10 und 11 liegt in einer die ebenen Außenflächen des Statorblechpaketes 2 tangierenden Zylinderfläche. Das in Fig. 1 rechts dargestellte Lagerschild 10 weist außer der zentralen Öffnung für den Durchtritt der den als Kurzschlußläufer ausgebildeten Rotor 12 tragenden Motorwelle 13 einen Sitz für ein erstes Lager 14 auf. Das andere Lagerschild 11 hat eine zylindrische Innenmantelfläche, die in einem an das Statorblechpaket 2 anschließenden Abschnitt einen dem Bohrungs- oder Innendurchmesser des Statorblechpaketes 2 entsprechenden Durchmesser hat. An diesen Abschnitt schließt sich zur freien Stirnseite hin ein im Durchmesser etwas größerer Abschnitt an, der einen Sitz für eine Lagerbuchse 15 bildet, welche das zweite Lager 16 für die Motorwelle 13 enthält. Ein Sicherungsring 17 hält die Lagerbuchse 15 in Anlage an einer am inneren Ende des Sitzes vorgesehenen Schulter.

Auf dem über das Lagerschild 11 überstehenden Endabschnitt der Motorwelle 13 ist fest ein Lüfterrad 18 bekannter Bauart angeordnet, das von einer Lüfterhaube 19 abgedeckt ist, welche auch das benachbarte Lagerschild 11 im Abstand übergreift.

Zur Verbesserung der Kühlung durch den vom Lüfterrad 18 und von der Lüfterhaube 19 über die Außenmantelfläche des Motors gelenkten Luftstrom ist die Außenmantelfläche des dem Lüfterrad 18 benachbarten Lagerschildes 11 mit in Motorlängsrichtung verlaufenden Rippen 20 versehen, welche einstückig mit dem Lagerschild ausgebildet sind und im Ausführungsbeispiel ein dreieckförmiges Querschnittsprofil haben sowie in ihrem Fußbereich einander angrenzen.

Das Lagerschild 10 ist oben unmittelbar neben dem Statorblechpaket 2 mit einem bis zur Statorwicklung 5 durchgehenden Kanal 21 versehen, durch den hindurch die Anschlußleitungen der Statorwicklung 5 in den Klemmenkasten 9 eingeführt werden. Der Boden des Klemmenkastens 9 ist deshalb mit einer auf den Kanal 21 ausgerichteten Öffnung versehen.

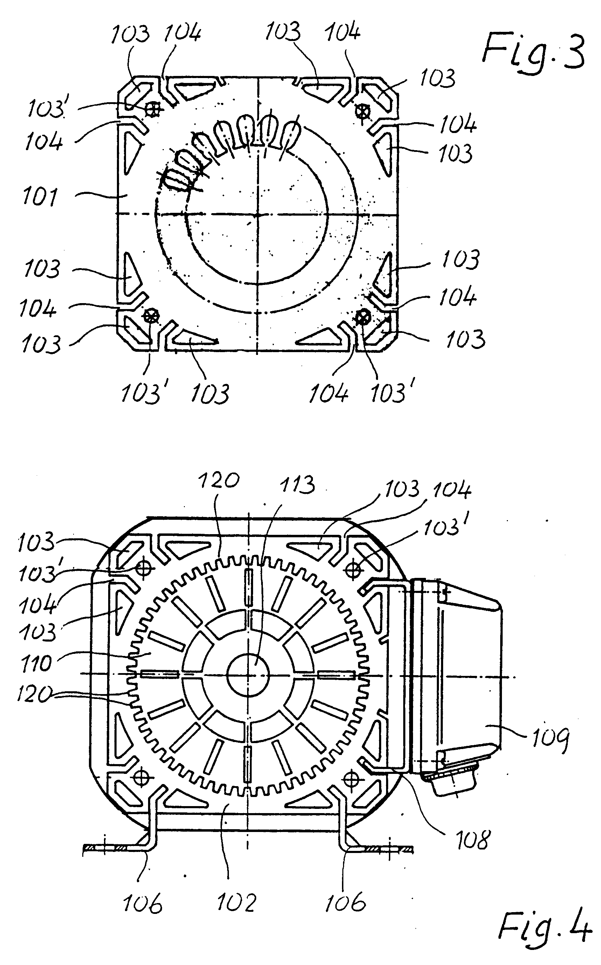

Ein gegenüber dem Blech 1 abgewandeltes Blech 101 zeigt Fig. 3. Die Abwandlungen bestehen zum einen darin, daß in jeder Ecke ein kreisrunder Durchbruch 103′ vorgesehen ist, welcher es ermöglicht, einen Bolzen durch das Blechpaket hindurchzuführen. Ferner unterscheidet sich das Blech 101 vom Blech 1 dadurch, daß in jedem Eckbereich zwei abgewinkelte, nach außen hin offene, schlitzartige Außnehmungen 104 vorgesehen sind, wodurch die Möglichkeit für das Verbinden von Füßen und/oder einem Klemmenkasten vergrößert werden. Schließlich unterscheidet sich das Blech 101 vom Blech 1 noch dadurch, daß in jedem Eckbereich drei geschlossene Durchbrüche 103 symetrisch zu der zugeordneten Diagonalen angeordnet sind. Diese geschlossenen Durchbrüche 103 bilden, wie die geschlossenen Durchbrüche 3 des Blechpaketes 1, das Statorblechpaket durchdringende Kühlkanäle.

Den Eingriff von als Füße dienenden Winkelschienen 106 in zwei der Ausnehmungen 104 zeigt Fig. 4. Auch der Klemmenkasten 109 ist mittels in zwei der Ausnehmungen 104 eingreifende Verankerungselemente 108 fest mit dem Statorblechpaket 102 verbunden. Bei dem in Fig. 4 dargestellten Ausführungsbeispiel sind wie bei demjenigen gemäß den Fig. 1 und 2 der beiden Lagerschilde, von denen das Lagerschild 110, aus dem die Motorwelle 113 herausragt, sichtbar ist, aus Gießharz hergestellt. Die Außenmantelfläche der Lagerschilde ist mit in Motorlängsrichtung verlaufenden Rippen 120 versehen.

Ein aus den Blechen 101 zusammengesetztes Blechpaket 102 ermöglicht dank der kreisrunden Durchbrüche 103′in einfacher Weise die Verbindung eines aus Metall bestehenden Lagerschildes 210 mit dem Statorblechpaket 102. In jedem der vier durch die Durchbrüche 103′ gebildeten Kanäle wird ein Verbindungsbolzen 125 eingesetzt, der mit einem verbreiterten Kopf an der dem Lagerschild 210 abgekehrten Stirnseite des Blechpaketes 102 anliegt und eine auf ihn ausgerichtete Bohrung 126 des Lagerschildes 210 durchdringt. Das auf der Seite des Lüfterrades 118 vorgesehene Lagerschild 211 besteht wie bei den Ausführungsbeispielen gemäß den Fig. 2 und 4 aus Gießharz. Eine das Lüfterrad 118 übergreifende und durch Stege von der Außenmantelfläche des Blechpaketes 102 distanzierte Lüfterhaube 119 verbessert die Luftführung und damit die Kühlwirkung.

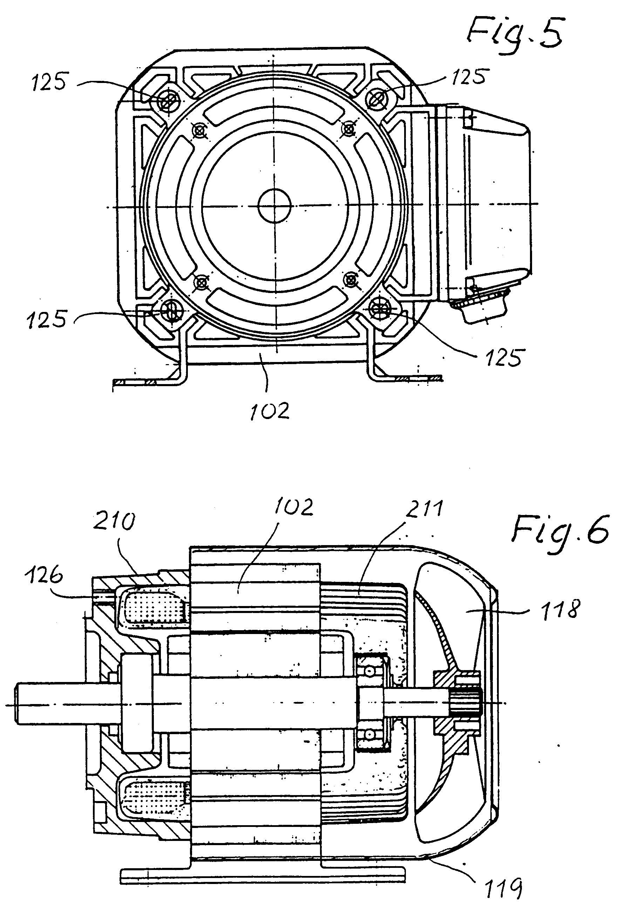

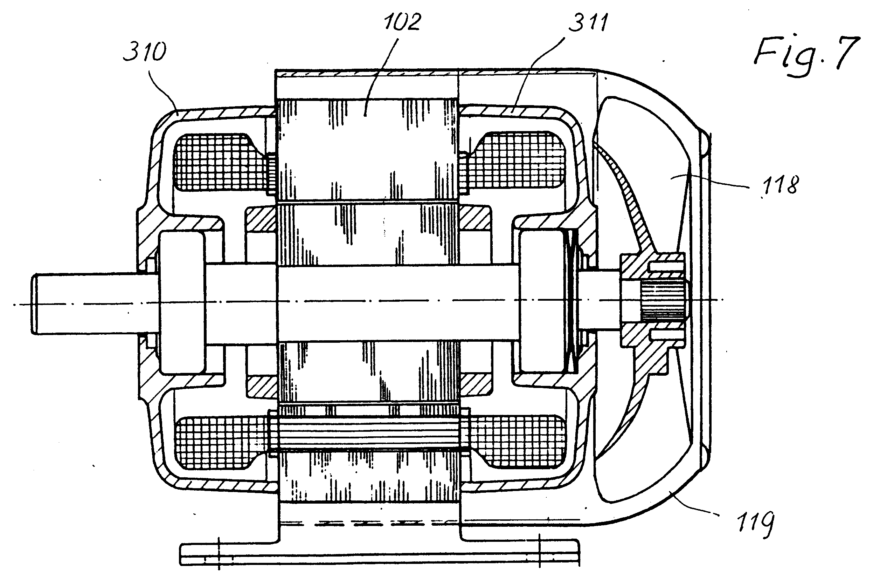

Auch das in Fig. 7 dargestellte Ausführungsbeispiel hat ein aus den Blechen 101 zusammengesetztes Statorblechpaket 102. Von den Ausführungsbeispielen gemäß den Fig. 4 bis 6 unterscheidet sich dieses Ausführungsbeispiel nur dadurch, daß beide Lagerschilde 310 und 311 aus Metall bestehen und mittels nicht dargestellter Verbindungsbolzen, welche die Durchbrüche 103′ des Blechpaketes 102 durchdringen, fest mit dem Blechpaket 102 verbunden sind. Auch bei diesem Ausführungsbeispiel ist also das Blechpaket 102 nicht in einem Gehäuse angeordnet. Ferner sind, wie bei den vorstehend beschriebenen Ausführungsbeispielen, die Füße dadurch mit dem Blechpaket 102 verbunden, daß sie in zwei der schlitzartigen Ausnehmungen eingreifen. Entsprechendes gilt für den nicht dargestellten Klemmenkasten. Die das Lüfterrad 118 übergreifende Lüfterhaube 119 ist wie bei den vorstehend beschriebenen Ausführungsbeispielen ausgebildet und angeordnet.

Alle in der vorstehenden Beschreibung erwähnten sowie auch die nur allein aus der Zeichnung entnehmbaren Merkmale sind weitere Ausgestaltungen der Erfindung.

**Patentansprüche**

1. Elektromotor, insbesondere Drehstromasynchronmotor, mit zwei Lagerschilden (10,11; 110; 210,211; 310,311), zwischen denen das Statorblechpaket (2; 102; 202) angeordnet ist und in welche die über die Stirnflächen des Statorblechpaketes (2; 102; 202) überstehenden Wickelköpfe der im Statorblechpaket (2; 102; 202) liegenden Wicklung (5) ragen, und das Statorblechpaket (2; 102; 202) bildenden, gleich ausgebildeten Blechen (1; 101), welche eine im wesentlichen quadratische Außenkontur haben und in mindestens zwei einander benachbarten Eckbereichen mit wenigstens je einem nach außen offenen Schlitz (4; 104) und einem Durchbruch (3; 103,103') unter Bildung von das Statorblechpaket (2; 102; 202) auf seiner ganzen Länge durchdringenden und radial außerhalb der Lagerschilde (10,11; 110;

210,211; 310,311) mündenden Kanäle versehen sind, dadurch gekennzeichnet, daß

    a) er im Bereich des Statorblechpaketes (2; 102; 202) gehäuselos mit freiliegender Außenmantelfläche des Statorblechpaketes (2; 102; 202) ausgebildet ist,

    b) die Lagerschilde (10,11; 110; 210,211; 310,311) unmittelbar an den beiden Stirnflächen des Statorblechpaketes (2; 102; 202) unter Freilassung der Eckbereiche und den diese durchdringenden Kanälen anliegen,

    c) die nach außen offenen Schlitze (4; 104) benachbarter Eckbereiche für den Eingriff entsprechend geformter Schienen (6,6; 106,108) als Verbindungsteile eines Motorfußes und/oder eines Klemmkastens (9) ausgebildet sind.

2. Elektromotor nach Anspruch 1, dadurch **gekennzeichnet,** daß die nach außen offenen Schlitze (4; 104) abgewinkelte Flanken haben.

3. Elektromotor nach Anspruch 1 oder 2, dadurch **gekennzeichnet,** daß wenigstens eines der beiden Lagerschilde (10, 11; 110, 211) aus Gießharz besteht.

4. Elektromotor nach Anspruch 1 oder 2, dadurch **gekennzeichnet,** daß wenigstens eines der beiden Lagerschilde (210; 310, 311) aus Metall besteht.

5. Elektromotor nach einem der Ansprüche 1 bis 4, dadurch **gekennzeichnet,** daß die Außenmantelfläche wenigstens des einen aus Gießharz bestehenden Lagerschildes (11; 110) zumindest auf einem Teil ihres Umfanges einstückig mit dem Lagerschild (11; 110) ausgebildeten, in Motorlängsrichtung verlaufenden Rippen (20; 120) versehen ist.

## Claims

1. Electric motor, in particular three-phase asynchronous motor, with two bearing plates (10, 11; 110; 210, 211; 310, 311), between which the stator plates (2; 102; 202) are located and into which project the end turns of the winding (5) located in the stator plates (2; 102; 202) and which end turns project beyond the end faces of the stator plates (2; 102; 202), and the plates (1; 101) of identical construction, forming the stator plates (2; 102; 202), which have a substantially square outer contour and in at least two adjacent corner regions are provided with at least one slot (4; 104) respectively, which is open towards the outside and one opening (3; 103; 103') forming channels penetrating the stator plates (2; 102; 202) over their entire length and opening out radially outside the bearing plates (10, 11; 110; 210, 211; 310, 311), characterised in that

    a) in the region of the stator plates (2; 102; 202), it is constructed without a housing with an exposed outer surface of the stator plates (2; 102; 202),

    b) the bearing plates (10, 11; 110; 210, 211; 310, 311) bear directly against the two end faces of the stator plates (2; 102; 202) thus exposing the corner regions and the channels penetrating the latter,

    c) the slots (4; 104) of adjacent corner regions, which slots are open towards the outside, for the engagement of correspondingly shaped bars (6, 6; 106, 108) are constructed as connecting parts of a motor base and/ or of a terminal box (9).

2. Electric motor according to Claim 1, characterised in that the slots (4; 104) which are open towards the outside have bent sides.

3. Electric motor according to Claim 1 or 2, characterised in that at least one of the two bearing plates (10, 11; 110, 211) consists of casting resin.

4. Electric motor according to Claim 1 or 2, characterised in that at least one of the two bearing plates (210; 310, 311) consists of metal.

5. Electric motor according to one of Claims 1 to 4, characterised in that the outer surface of at least the one bearing plate (11; 110) consisting of casting resin is provided at least on part of its periphery with ribs (20; 120) constructed in one piece with the bearing plate (11; 110) and extending in the longitudinal direction of the motor.

## Revendications

1. Moteur électrique, notamment moteur synchrone triphasé qui comprend deux flasques de montage (10, 11; 110, 210, 211; 310, 311) entre lesquels est monté le paquet de tôles magnétiques du stator (2, 102; 202) et des faces frontales duquel font saillie les têtes de l'enroulement (5) logées dans le paquet de tôles (2; 102; 202), et les tôles similaires (1; 101) formant le paquet de tôles du stator (2; 102; 202) qui présentent un contour essentiellement quadratique et sont pourvus respectivement dans, au moins, deux régions d'angle adjacentes, d'au moins, une fente s'ouvrant vers l'extérieur et d'une ouverture ou d'une découpe (3, 103, 103') formant des canaux s'étendant sur toute la longueur du paquet de tôles (2, 102; 202) et radialement à l'extérieur des flasques de montage (10, 11; 110; 210, 211; 310, 311), caractérisé en ce que :

a) il ne comporte pas d'enveloppe ou de boîtier dans la région du paquet de tôles de stator (2; 102; 202) où la surface extérieure du paquet de tôles (2; 102; 202) est decouverte;

b) les flasques de montage (10, 11; 110; 210, 211; 310, 311) s'appliquent directement contre les deux surfaces frontales du paquet de tôles de stator (2; 102; 202) en laissant libre la région des coins et les canaux qui les traversent;

c) les régions des coins voisines des fentes s'ouvrant vers l'extérieur (4;104) conçues pour permettre l'insertion de ferrures judicieusement formées (6,6; 106, 108) constituent les éléments de liaison d'un pied de moteur et/ou d'une boîte à bornes (9).

2.  Moteur électrique selon la revendication 1, caractérisé en ce que les fentes s'ouvrant vers l'extérieur (4; 104) ont des flancs pliés.

3.  Moteur électrique selon la revendication 1 ou 2, caractérisé en ce que l'une, au moins, des deux flasques de montage (10, 11; 110, 211) est en une résine à mouler.

4.  Moteur électrique selon la revendication 1 ou 2, caractérisé en ce que l'un, au moins, des deux flasques de montage (210; 310, 311) est en métal.

5.  Moteur électrique selon l'une quelconque des revendications 1 à 4, caractérisé en ce que la surface d'enveloppe extérieure de l'un, au moins, des flasques de montage (11, 110) en résine à mouler qui est, au moins, sur une partie de son pourtour, solidaire dudit flasque de montage (11, 110) est pourvu de nervures (20, 120) s'étendant dans la direction de l'axe longitudinal du moteur.

Fig.1

Fig.2

EP 0 254 930 B1

Fig.3

Fig.4

Fig.5

Fig.6

Fig. 7

EP 0 254 930 B1